Europäisches Patentamt

European Patent Office

Office européen des brevets

(19)

(11) Veröffentlichungsnummer : **0 582 606 B1**

(12) **EUROPÄISCHE PATENTSCHRIFT**

(45) Veröffentlichungstag der Patentschrift :
21.12.94 Patentblatt 94/51

(51) Int. Cl.$^5$ : **G01H 13/00, G01D 21/02**

(21) Anmeldenummer : **92909153.6**

(22) Anmeldetag : **02.05.92**

(86) Internationale Anmeldenummer :
**PCT/DE92/00364**

(87) Internationale Veröffentlichungsnummer :
**WO 92/19942 12.11.92 Gazette 92/28**

(54) **VERFAHREN ZUR ERMITTLUNG DER GRÖSSE VON PARAMETERN.**

(30) Priorität : **02.05.91 DE 4114268**

(43) Veröffentlichungstag der Anmeldung :
**16.02.94 Patentblatt 94/07**

(45) Bekanntmachung des Hinweises auf die
Patenterteilung :
**21.12.94 Patentblatt 94/51**

(84) Benannte Vertragsstaaten :
**DE FR GB NL**

(56) Entgegenhaltungen :
**EP-A- 0 053 341**
**DE-A- 3 539 156**
**GB-A- 2 219 088**
**US-A- 4 095 474**

(56) Entgegenhaltungen :
**J. VAC. SCI. TECHNOL., Bd. B6, Nr. 6, Dezember 1988, New York, NY, US, Seiten 1809-1813, R.T. HOWE: 'Surface micromachining for microsensors and microactuators'**
**Technische Rundschau, Bd. 81, Nr. 35, 1. September 1989, Bern, CH, Seiten 94-97; WERNER H. HOTTINGER: 'Die smarten Sensoren'**

(73) Patentinhaber :
**KERNFORSCHUNGSZENTRUM KARLSRUHE GMBH**
**Postfach 36 40**
**D-76021 Karlsruhe (DE)**

(72) Erfinder : **SCHOMBURG, Werner**
**Im Speitel 37**
**D-7500 Karlsruhe 41 (DE)**

(74) Vertreter : **Gottlob, Peter**
**Kernforschungszentrum Karlsruhe GmbH,**
**Weberstrasse 5**
**D-76133 Karlsruhe (DE)**

## Beschreibung

Die Erfindung betrifft ein Verfahren zur Ermittlung der Größe von Parametern, welche die Frequenz von Eigenschwingungen von Mikrostrukturen ändern.

In J. Microwave Power (1987) Seiten 85 bis 93 sind verschiedene Verfahren zur berührungslosen Temperaturmessung an während der Messung nicht direkt zugänglichen Meßobjekten beschrieben. In jedem Fall wird eine Glasfaser bis dicht an das Objekt herangeführt, dessen Temperatur gemessen werden soll. Aus der Messung der temperaturabhängigen Fluoreszenzeigenschaften eines am Meßobjekt angebrachten Leuchtstoffes wird auf die Temperatur am Meßort geschlossen. Diese Verfahren haben den Nachteil, daß eine Glasfaser auf mindestens ca. 10 mm an das Meßobjekt herangeführt werden muß.

Aus der US 3,596,069 ist ein Verfahren der e. g. Art bekannt, bei dem die Resonanzfrequenz eines zylindrischen Körpers bestimmt wird. Daraus wird dann der frequenzbestimmende Parameter ermittelt.

Des weiteren ist es aus der DE 30 12 774 A1 bekannt Prüfkörper mit Ultraschallschwingungen anzuregen. Danach wird die Amplitude der Resonanzschwingung erfaßt. Aus der Abweichung dieser Resonanzamplitude zu einem Sollwert kann dann auf Fehler innerhalb des Prüfkörpers geschlossen werden.

In der GB 21 43 036 A wird ein Verfahren zur Detektion von intergranularen Fehlern von Prüflingen beschrieben. Dabei werden Ultraschallechos von intakten Prüflingen als Sollwert aufgenommen. Der Vergleich von Ultraschallechos von fehlerhaften Prüflingen mit diesen Sollwerten ermöglicht Aussagen über den Grad der Schädigung. Für dünne Membranen ist dieses Verfahren nicht geeignet, weil die Laufzeiten des Schalls in der Membran zu klein sind.

Ein gattungsgemäßes Verfahren ist auch aus dem US-Buch: "Ultrasonic Testing", Herausgeber F. Szilard; 1982; Seiten 432 bis 436 bekannt.

In Journal of Acoustical Society of America, Vol. 80, No. 6; Dec. 1986; Seiten 1762 bis 1776 ist schließlich die Resonanzstreuung von Ultraschall an mehreren Schichten beschrieben.

Die Erfindung hat die Aufgabe, ein Verfahren zur Verfügung zu stellen, das die Messung von Temperaturen, Dehnungen, Drücken, Dichten, Strömungsgeschwindigkeiten, Beschichtungsraten, inneren mechanischen Spannungen und Elastizitätsmodulen an während der Messung nicht direkt zugänglichen Meßobjekten ermöglicht, ohne daß während der Messung Anschlüsse oder Zuleitungen bis dicht an das Meßobjekt herangeführt zu werden brauchen.

Diese Aufgabe wird erfindungsgemäß durch die Merkmale des Patentanspruchs 1 gelöst. Die Unteransprüche geben vorteilhafte Ausgestaltungen der Erfindung wieder.

Die Erfindung ist im folgenden anhand der Figuren 1 bis 6 und fünf Ausführungsbeispielen näher erläutert.

Dabei zeigt die Figur 1 schematisch eine Anordnung zur Frequenzerfassung und die Figur 2 den Absorptionsverlauf des Ultraschalls mit der Frequenz. Die Figuren 3 bis 6 zeigen beispielhafte Ausführungsformen von Mikrostrukturen.

Das erste Ausführungsbeispiel beschreibt die Temperaturmessung mit einer strukturierten Titanmembran, die über einen festen Rahmen frei gespannt ist.

Nach dem in EP 0 104 685 beschriebenen Verfahren wurden wabenförmige Mikrostrukturen 1 auf einer frei gespannten, 3 μm dünnen Titanmembran 2, die über einem festen Rahmen 3 frei gespannt war, hergestellt. Der feste Rahmen war rund mit einem Außendurchmesser von 40 mm und einem Innendurchmesser von 25 mm und bestand aus einer 6 mm dicken Eisen-Nickel-Legierung mit einem linearen thermischen Ausdehnungskoeffizienten von ca. 5 x $10^{-6}$. Die wabenförmigen Mikrostrukturen wurden mit dem /LIGA-Verfahren (E. W. Becker et al, Microcircuit Engineering 4 (1986) Seiten 35 bis 56) aus Nickel hergestellt und waren ca. 28 μm hoch bei einer Stegbreite von 10 μm und einer Wabenbreite von 80 μm.

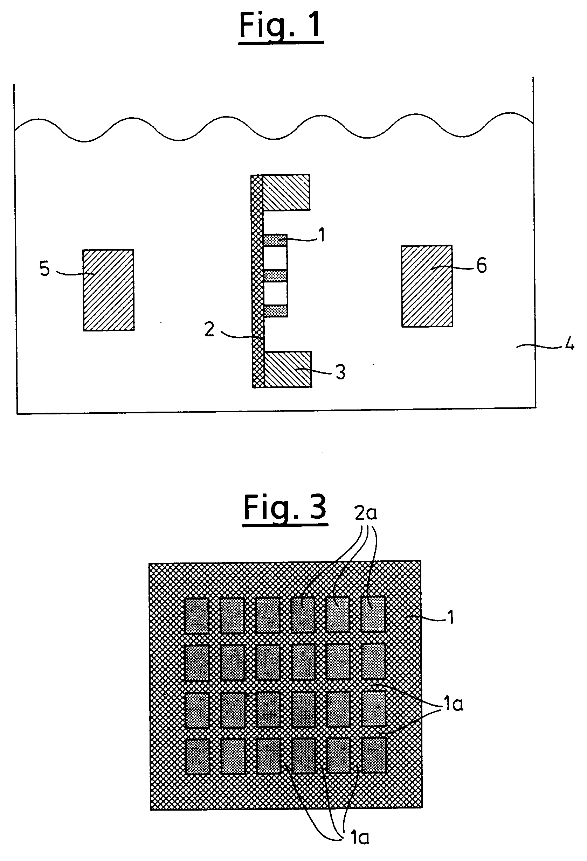

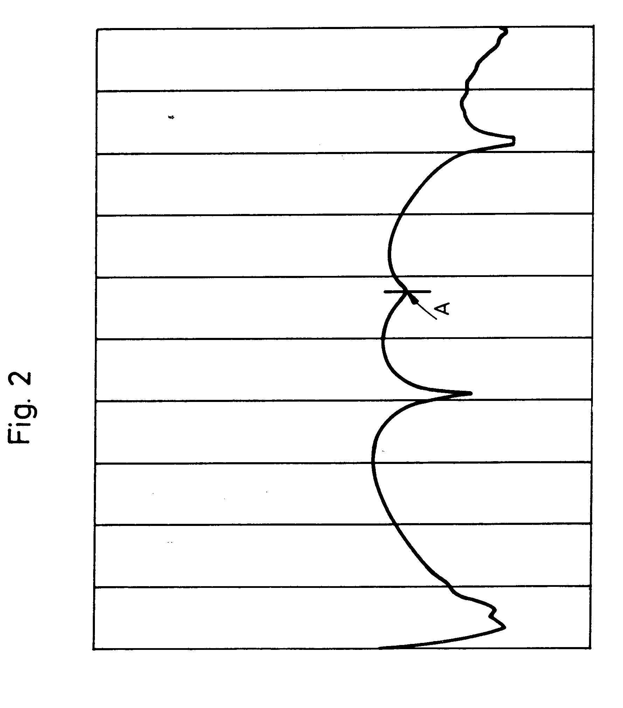

Die so strukturierte Membran wurde in ein Wasserbad 4 mit einer Temperatur von 21° C gelegt und durch einen Ultraschallgeber 5 mit Ultraschall im Frequenzbereich von 500 kHz bis 4 MHz beschallt (vergl. Fig. 1). Ein Ultraschallempfänger 6 hinter der Folie zeichnete die Intensität des durch die Folie hindurchtretenden Ultraschalls in Abhängigkeit von der Ultraschallfrequenz auf. Der Durchmesser von Ultraschallgeber und - empfänger betrug ca. 12 mm; ihr relativer Abstand war 30 mm. Es zeigte sich eine durch eine Schwingungsresonanz der strukturierten Folie hervorgerufene vermehrte Absorbtion des Ultraschalls bei einer Frequenz von 2,87 MHz. Diese vermehrte Absorbtion wird in Fig. 2 an der mit A bezeichneten Stelle sichtbar. In Fig. 2 ist die mit dem Ultraschallempfänger 6 registrierte Intensität des Ultraschalls über der Ultraschallfrequenz aufgetragen. Der Frequenzbereich der Abszisse reicht dabei von 500 KHz bis 4 MHz. Bei Messungen mit einer auf sonst gleiche Art gefertigten Titanmembran 2, auf der aber keine Mikrostrukturen 1 angebracht waren, und bei Messungen ohne Membran zwischen Ultraschallgeber 5 und -empfänger 6 zeigte sich bei sonst gleichen Intensitätsspektren, wie in Figur 2, keine vermehrte Absorption an der mit A bezeichneten Stelle. Die durch die strukturierte Membran transmittierte Ultraschallintensität wurde im Bereich der Resonanz gegenüber der Transmission durch eine umstrukturierte Folie um ca. 9 dB vermindert. Als Güte der Resonanz wurde 14 ermittelt.

Durch die Erwärmung des Wasserbades auf 45° C verschob sich diese Resonanzfrequenz auf 2,77 MHz. Die Verschiebung der Resonanzfrequenz wurde verursacht durch den gegenüber dem Rahmen größeren thermischen Ausdehnungskoeffizienten der Titanfolie von ca. $9 \times 10^{-6}$, der zu einer Verminderung der inneren Spannung der Titanmembran bei erhöhter Badtemperatur führte. Eine verminderte innere Spannung der die Mikrostrukturen verschließenden Membran führt zu einer niedrigeren Resonanzfrequenz.

Das zweite Anwendungsbeispiel beschreibt die Dehnungsmessung mit Hilfe einer strukturierten Membran.

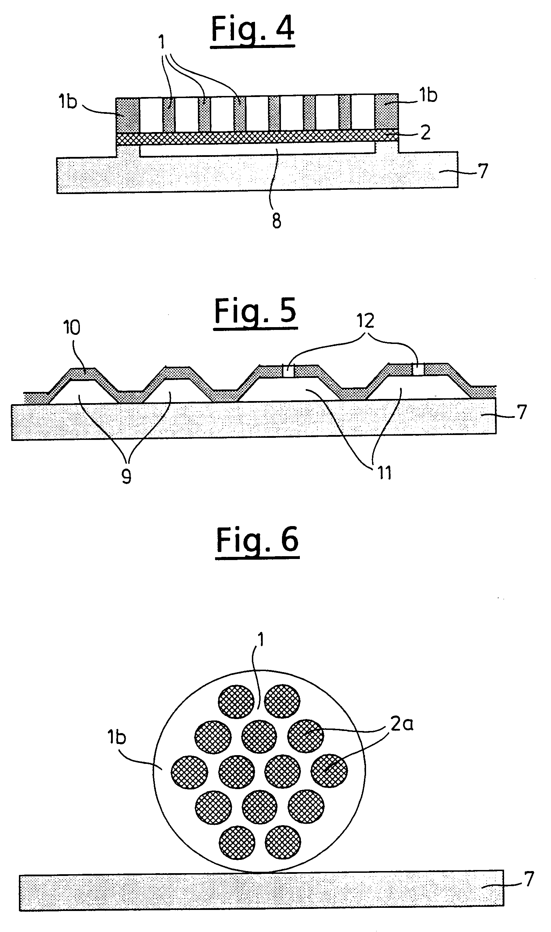

Mit dem in EP 0 104 685 beschriebenen Verfahren kann eine Mikrostruktur 1 gemäß Figur 3 auf einer über einem Rahmen frei gespannten Membran angebracht werden. Die Mikrostruktur besteht dabei aus einer Anordnung von Stegen, die rechteckförmige Bereiche 2a der Membran frei belassen. Die rechteckigen Bereiche 2a sind alle gleich ausgerichtet. Mit dem in der 9. Auflage des Buches von A. Budo "Theoretische Mechanik", herausgegeben vom VEB Deutscher Verlag der Wissenschaften, Berlin 1978 auf Seite 408 angegebenen Verfahren läßt sich eine zweidimensionale Wellengleichung berechnen, aus der sich die Resonanzfrequenzen des innerhalb der Stege frei beweglichen Teils 2a der Membran bestimmen lassen. Es ergibt sich:

$$\nu_{mn} = \frac{1}{2} \sqrt{\frac{\sigma_a\, m^2}{a^2} + \frac{\sigma_b\, n^2}{b^2}} \sqrt{\frac{1}{\rho_M}} \quad (1)$$

Dabei bezeichnet $\nu_{mn}$, die Resonanzfrequenz mit m Schwingungsbäuchen in Richtung einer Kante der rechteckförmigen Bereiche mit der Länge a und mit n Schwingungsbäuchen entlang der Kante mit der Länge b. $\sigma_a$ bzw. $\sigma_b$ bezeichnen die innere mechanische Spannung der Membran in Richtung der Kanten der Längen a bzw. b. $\rho_M$ steht für die Dichte der Membran.

Änderungen der inneren Spannungen entlang der beiden Kantenlängen können deshalb aus den Verschiebungen der Resonanzfrequenzen $\nu_{11}$, $\nu_{12}$ und $\nu_{21}$ berechnet werden. Mit einer rechteckigen Mikrostruktur können deshalb Dehnungen in zwei unterschiedlichen Richtungen nachgewiesen und von einander unterschieden werden. Einfacher wird die Auswertung der Ultraschallspektren jedoch, wenn eine der Kanten des Rechteckes wesentlich länger ist als die andere. So hat nach Gleichung 1 nur die Spannungsänderung entlang der kürzeren Kante großen Einfluß auf die Grundfrequenz $\nu_{11}$. Für a<<b gilt:

$$\nu_{11} = \frac{1}{2a} \sqrt{\frac{\sigma_a}{\rho_M}} \quad (2)$$

Sollen die Spannungen in zwei verschiedenen Richtungen gemessen werden, so können Rechtecke mit unterschiedlichen Längen $a_1$ und $a_2$ der kürzeren Kanten unterschiedlich auf der Membran orientiert werden. Vorteilhaft bei dieser Anordnung ist, daß nur jeweils die Grundfrequenzen gemessen werden müssen und daß zwei Richtungen, in denen Membranspannungen bestimmt werden sollen, nicht unbedingt senkrecht aufeinander zu stehen brauchen. Außerdem kann mit dieser Methode die Anzahl der Meßrichtungen durch die Anordnung weiterer Rechtecke erhöht werden.

Bei der Messung eines breitbandigen an der Membran reflektierten Ultraschallspektrums werden die Resonanzfrequenzen sichtbar. Durch eine Dehnung des die Membran haltenden Rahmens wird auch die Membran gedehnt, so daß sich die innere mechanische Spannung der Membran in Richtung der Rahmendehnung verändert. Mit der inneren Spannung der Membran ändern sich auch die Resonanzfrequenzen, so daß aus den Veränderungen der beiden Resonanzfrequenzen auf Größe und Richtung der Rahmendehnung gechlossen werden kann.

Für diese Dehungsmessungen ist es von Vorteil, wenn der Rahmen 3 und die Membran 2 aus dem gleichen Material hergestellt werden, damit Temperaturänderungen keine Dehnungsänderungen hervorrufen können. Die Mikrostruktur 1 sollte entweder auch aus dem gleichen Material bestehen wie Rahmen und Membran oder die Stege 1a der Mikrostruktur sind so flach und schmal, daß ihre thermische Dehnung die Messung nicht stört. 10 µm breite und 30 µm hohe Nickelstege erwiesen sich gegenüber einer 3 µm dünnen Titanmembran als einerseits flach und schmal genug, um die Messung bei Temperaturänderungen um $\pm 20°$ C nicht durch eine thermische Ausdehnung zu stören.

Wenn die Mikrostrukturen 1 gemäß Fig. 4 mit einem geschlossenen Rahmen 1b umschlossen ist, kann sie aus der Membran herausgetrennt, und als Dehnungsmeßstreifen an einem Prüfkörper 13 befestigt werden. Hierzu ist es erforderlich, daß für das die Mikrostrukturen umgebende Medium ein direkter Zugang zu dem Volumen 8 zwischen Membran und Substrat vorhanden ist. Dieser direkte Zugang verhindert, daß sich über die Membran ein Differenzdruck aufbauen kann, der über eine Spannungserhöhung in der Membran bei der Messung der Resonanzfrequenzen eine Dehnung des Prüfkörpers 13 vortäuschen würde.

Das dritte Ausführungsbeispiel beschreibt eine berührungslose Druckmessung.

Für die Druckmessung mit dem hier beschriebenen Verfahren sind zum Beispiel Mikrostrukturen geeignet, die auf einem Substrat 7 gemäß Figur 5 Hohlräume 9 umschließen. Solche Strukturen lassen sich zum Beispiel nach dem von R. T. Howe in J. Vac. Technol. B6 (1988) auf den Seiten 1809 bis 1813 beschriebenen Verfahren herstellen. Bei diesem Verfahren wird über einer Opferschicht eine Deckschicht 10 aufgebracht. Nach dem Auflösen der Opferschicht wird der Hohlraum 9 verschlossen. Auf diese Weise können nach oben hin mit einer Membran verschlossene, nicht miteinander verbundene, ungefähr zylinderförmige Hohlräume hergestellt werden. Eine Druckdifferenz zwischen den Hohlräumen und dem umgebenden Medium führt hier zu einer Erhöhung der mechanischen Spannung in der Membran und somit zu einer Verschiebung der Resonanzfrequenz.

Um durch eine unterschiedliche thermische Dehnung von Substrat 7 und Deckschicht 10 oder durch eine Dehnung des Substrates verursachte Spannungsänderung erkennen und bei der Messung des Druckes berücksichtigen zu können, ist es ein großer Vorteil, wenn neben den abgeschlossenen Hohlräumen 9 auch solche Hohlräume 11 hergestellt werden, die aufgrund anderer geometrischer Abmessungen andere Resonanzfrequenzen aufweisen und über Öffnungen 12 direkt mit dem die Strukturen umgebenden Medium in Verbindung stehen. Aus der durch die Hohlräume 11 hervorgerufenen Resonanzfrequenz kann dann eine Korrektur berechnet werden, die eine genauere Bestimmung des Druckes ermöglicht.

Das vierte Anwendungsbeispiel beschreibt die Messung der Dichte des die Strukturen umgebenden Mediums.

Die niedrigste Resonanzfrequenz $\nu_K$ einer kreisrunden Membran mit dem Radius r, der inneren Spannung $\sigma$, der Dicke d und der Dichte $\rho_M$ kann zum Beispiel mit Hilfe der von R. E. Acosta et al. in Solid State Technology (Okt. 1984) auf Seite 206 angegebenen Gleichungen berechnet werden, wenn die Dichte des die Membran umgebenden Mediums mit $\rho_n$ bezeichnet wird:

$$\nu_K = \frac{1}{2{,}61\,r} \sqrt{\frac{\sigma}{\rho_M + 1{,}34\,\rho_n r/d}} \qquad (3)$$

Wie Gleichung 3 zeigt, ist die Resonanzfrequenz der über einer kreisrunden Mikrostruktur frei gespannten Membran abhängig von der Dichte des die Membran umgebenden Mediums. Deshalb ist es möglich, über die Messung der Resonanzfrequenz einer solchen Membran die Dichte des sie umgebenden Mediums zu bestimmen.

Für die Messung der Dichte eines die Membran umgebenden Mediums ist es von Vorteil, wenn Mikrostrukturen 1, die kreisrunde Flächen 2a der Membran frei gespannt halten, über einen Rahmen 1b zusammegehalten werden und, nach ihrer Herstellung mit dem in EP 0 104 685 beschriebenen Verfahren, aus der Membran herausgetrennt werden. Der Rahmen wird dann wie in Figur 6 gezeigt auf einem Substrat 7 befestigt, wenn der Sensor ortsfest gemacht werden soll. Durch diese Anbringung des Sensors wird weitgehend verhindert, daß äußere Kräfte auf die Mikrostrukturen oder die Membran einwirken können. Vorteilhaft ist dabei auch eine Abschirmung der Mikrostrukturen gegenüber etwa vorhandenen Strömungen. Damit keine Temperaturänderungen Dichteveränderungen des Mediums vortäuschen können, ist die Herstellung von Mikrostrukturen und Membran aus dem gleichen Material von Vorteil.

Mit dem in Fig. 6 dargestellten Sensor kann zum Beispiel der Ladungszustand eines Akkumulators oder die Dichte eines Galvanikelektrolyten gemessen werden. Durch die Anbringung zweier Sensoren, deren Resonanzfrequenzen sich aufgrund unterschiedlicher geometrischer Abmessungen der Mikrostrukturen unterscheiden, und von denen einer gegenüber Strömungen abgeschirmt ist, der andere aber nicht, ist die Messung von Strömungsgeschwindigkeiten möglich, da sich über die Membran ein Differenzdruck ausbildet, wenn ein Medium senkrecht zum Membranquerschnitt strömt.

Der in Figur 6 dargestellte Sensor ist auch für die Messung von Beschichtungsraten in einem Galvanikelektrolyten geeignet, wenn die Mikrostrukturen und die Membran aus einem elektrisch nicht leitfähigen Material bestehen und wenn die den Mikrostrukturen abgewandte Seite der Membran mit einer Galvanikstartschicht versehen wurde und diese Startschicht kontaktiert worden ist. Bei einer Beschichtung der Membran ändert sich in Gleichung 3 sowohl die mittlere Dichte des Membranmaterials als auch die Membrandicke, was zu Veränderungen der Resonanzfrequenz führt. Damit die innere mechanische Spannung der abgeschiedenen Schicht nicht die Messung der abgeschiedenen Schichtdicke beeinträchtigt, ist eine Kalibrierung bei den gleichen Bedingungen erforderlich, bei denen die Messung gemacht werden soll. Es ist aber auch möglich, die innere Spannung der gerade abgeschiedenen Schicht zu messen, wenn die Abscheiderate bei bekannter Stromausbeute über die Messung des Abscheidestromes bestimmt wird. Abgeschiedene Dicke und innere mechanische Spannung der abgeschiedenen Schicht können bestimmt werden, wenn zwei Strukturen der in Figur 6 dargestellten Art eingesetzt werden, deren Resonanzfrequenzen sich aufgrund unterschiedlicher Membrandicken oder aufgrund unterschiedlicher Radien der runden, frei gespannten Bereiche 2a der Membran voneinander unterscheiden.

Im fünften Ausführungsbeispiel wird beschrieben, wie Materialveränderungen an dünnen Strahlfenstern überwacht werden können, indem auf diesen Fenstern angebrachte Mikrostrukturen einen oder mehrere Teilbereiche zu schwingungsfähigen Strukturen machen, deren Resonanzfrequenz von der inneren Spannung des Strahlfensters abhängt.

Vakuumfenster an Teilchenbeschleunigern oder vor Detektoren bestehen oft aus Membranen aus Kunststoffen oder Metallen, die nur wenige μm dünn sind. Diese Vakuumfenster können sich nach längerem Einsatz durch chemische Reaktionen mit der Umgebung oder durch die Wechselwirkung mit ionisierender Strahlung dahingehend verändern, daß der Bruch des Vakuumfensters zu befürchten ist. Diese Veränderungen an den Vakuumfenstern können mit Änderungen der inneren Spannung der Fenster einhergehen, die durch einen veränderten Elastizitätsmodul oder eine veränderte Dehnung des Fensters hervorgerufen werden. Die Frequenzen der Resonanzschwingungen, die möglich werden, wenn die Fenstermembran mit Mikrostrukturen der in Figur 6 gezeigten Art versehen ist, sind gemäß Gleichung 3 von der inneren Spannung σ der Fenstermembran abhängig. Durch die Messung der Resonanzfrequenzen kann deshalb eine Veränderung der Materialeigenschaften der Fenstermembran erkannt werden. Die Beschädigung empfindlicher Anlagen durch den unerwarteten Bruch eines Vakuumfensters kann so durch den rechtzeitigen Austausch des Fensters verhindert werden.

Ein weiterer Vorteil des Verfahrens besteht in der guten Ortsauflösung der Messungen, welche durch die kleine Ausdehnung von Einzelstrukturen ermöglicht wird.

Temperaturmessungen sind wegen der geringen Wärmekapazität der Mikrostrukturen fast verzögerungsfrei.

## Patentansprüche

1. Verfahren zur Ermittlung der Größe von Parametern, welche die Frequenz von Eigenschwingungen von Mikrostrukturen (1, 2; 7, 10) ändern, wobei die Mikrostrukturen mindestens eine an ihrem Rand fixierte Membran (2; 7) aufweisen und wobei mindestens eine Eigenschwingung der Mikrostrukturen zwischen 100 KHz bis 100 MHz liegt durch
   a) Erfassen der Frequenz der charakteristischen Eigenschwingung der Mikrostrukturkörper, wobei die Mikrostrukturen mit Ultraschall beschallt werden und die Intensität des Ultraschalls in Transmission oder in Reflexion erfaßt wird, und
   b) Ermitteln der Größe der Parameter mit Hilfe einer Eichkurve.

2. Verfahren nach Anspruch 1, dadurch gekennzeichnet, daß der zu messende Parameter die Temperatur der Mikrostruktur, bzw. ihrer Umgebung ist, wobei die Mikrostruktur aus Halterahmen und darüber frei gespannter Membran besteht und wobei Halterahmen und Membran unterschiedliche thermischenn Ausdehnungskoeffizienten beseht.

3. Verfahren nach Anspruch 1, dadurch gekennzeichnet, daß der zu messende Parameter die Längenänderung einer Unterlage ist, wobei die Mikrostruktur fest mit der Unterlage verbunden ist.

4. Verfahren nach Anspruch 2, dadurch gekennzeichnet, daß der zu messende Parameter der Umgebungsdruck ist, wobei die Membran mit einer Haltestruktur eine nach außen dichte Kappe bildet.

5. Verfahren nach Anspruch 1, dadurch gekennzeichnet, daß der zu messende Parameter der Druckabfall über der Membran ist.

6. Verfahren nach Anspruch 1, dadurch gekennzeichnet, daß der zu messende Parameter die Dichte des umgebenden Mediums ist.

7. Verfahren nach Anspruch 1, dadurch gekennzeichnet, daß der zu messende Parameter die Strömungsgeschwindigkeit des umgebenden Mediums ist.

8. Verfahren nach Anspruch 1, dadurch gekennzeichnet, daß der zu messende Parameter die Massenbelegung der Membran ist.

9. Verfahren nach Anspruch 1, dadurch gekennzeichnet, daß der zu messende Parameter der Elastizitätsmodul der Membran ist.

10. Verfahren nach Anspruch 1, dadurch gekennzeichnet, daß der zu messende Parameter die innere mechanische Spannung σ der Membran ist.

11. Verfahren nach einem der Ansprüche 1 bis 10, dadurch gekennzeichnet, daß mehrere Mikrostrukturen für die Ermittlung mindestens eines der Parameter nach den Ansprüchen 2 bis 10 auf einem gemeinsamen Träger angeordnet sind.

## Claims

1. Method of determining the magnitude of parameters which change the frequency of natural oscillations of microstructures (1, 2; 7, 10), the microstructures having at least one diaphragm (2, 7) secured on their edge, and at least one natural oscillation of the microstructures lying between 100 KHz and 100 MHz, by
   a) detecting the frequency of the characteristic natural oscillation of the microstructure bodies, the microstructures being impinged by ultrasonics, and the intensity of the ultrasonics being detected in transmission or in reflection, and
   b) determining the magnitude of the parameters by means of a calibration curve.

2. Method according to claim 1, characterised in that the parameter to be measured is the temperature of the microstructure, or of its surroundings, the microstructure comprising a supporting frame and a diaphragm, which is freely tensioned above said frame, and the supporting frame and diaphragm having different coefficients of thermal expansion.

3. Method according to claim 1, characterised in that the parameter to be measured is the change in length of a base, the microstructure being securely connected to the base.

4. Method according to claim 2, characterised in that the parameter to be measured is the ambient pressure, the diaphragm forming with a supporting structure an outwardly tight cap.

5. Method according to claim 1, characterised in that the parameter to be measured is the drop in pressure above the diaphragm.

6. Method according to claim 1, characterised in that the parameter to be measured is the density of the surrounding medium.

7. Method according to claim 1, characterised in that the parameter to be measured is the velocity of flow of the surrounding medium.

8. Method according to claim 1, characterised in that the parameter to be measured is the weight per unit area of the diaphragm.

9. Method according to claim 1, characterised in that the parameter to be measured is the modulus of elasticity of the diaphragm.

10. Method according to claim 1, characterised in that the parameter to be measured is the internal mechanical tension $\sigma$ of the diaphragm.

11. Method according to one of claims 1 to 10, characterised in that a plurality of microstructures are disposed on a common carrier for determining at least one of the parameters according to claims 2 to 10.

**Revendications**

1. Procédé pour déterminer la grandeur de paramètres qui modifie la fréquence propre des oscillations de microstructures (1, 2 ; 7, 10), les microstructures ayant au moins une membrane (2, 7) fixée suivant son bord et au moins une oscillation propre des microstructures est comprise entre 100 KHz et 100 MHz,
    a) on détecte la fréquence de l'oscillation propre caractéristique du corps à microstructures, les microstructures recevant des ultrasons et on détecte l'intensité des ultrasons transmis ou réfléchis,
    b) on détermine la grandeur des paramètres à l'aide d'une courbe d'étalonnage.

2. Procédé selon la revendication 1, caractérisé en ce que le paramètre à mesurer est la température de la microstructure ou de son environnement, la microstructure étant formée d'un châssis de support sur lequel est tendue librement la membrane, le châssis de support et la membrane ayant des coefficients de dilatation thermiques différents.

3. Procédé selon la revendication 1, caractérisé en ce que le paramètre à mesurer est la variation de longueur d'un support, la microstructure étant reliée solidairement au support.

4. Procédé selon la revendication 2, caractérisé en ce que le paramètre à mesurer est la pression environnante, la membrane formant un capuchon étanche vis-à-vis de l'extérieur avec la structure de support.

5. Procédé selon la revendication 1, caractérisé en ce que le paramètre à mesurer est la chute de pression au niveau de la membrane.

6. Procédé selon la revendication 1, caractérisé en ce que le paramètre à mesurer est la densité du milieu environnant.

7. Procédé selon la revendication 1, caractérisé en ce que le paramètre à mesurer est la vitesse d'écoulement du fluide environnant.

8. Procédé selon la revendication 1, caractérisé en ce que le paramètre à mesurer est la charge massique de la membrane.

9. Procédé selon la revendication 1, caractérisé en ce que le paramètre à mesurer est le module d'élasticité de la membrane.

10. Procédé selon la revendication 1, caractérisé en ce que le paramètre à mesurer est la tension mécanique interne $\sigma$ de la membrane.

11. Procédé selon l'une des revendications 1 à 10, caractérisé en ce que plusieurs microstructures sont prévues pour déterminer au moins l'un des paramètres selon les revendications 2 à 10 sur un support commun.

## Fig. 1

## Fig. 3

Fig. 2

EP 0 582 606 B1

## Fig. 4

## Fig. 5

## Fig. 6

9